# EUROPÄISCHE PATENTSCHRIFT

(11) **EP 1 249 286 B1**
(45) Veröffentlichungstag und Bekanntmachung des Hinweises auf die Patenterteilung: **06.07.2005**
(21) Anmeldenummer: 01250127.6
(22) Anmeldetag: 11.04.2001
(51) Int. Cl.: B21D 39/03, F16B 17/00

(54) **Verfahren und Vorrichtung zum Ausformen des Hinterschnitts beim Durchsetzfügen flächig aufeinanderliegender Bauteile, insbesondere beschichteter und/oder endlackierter Blechplatinen**
Method and device for forming of undercuttings when joining superimposed workpieces, in particular coated and/or varnished metal sheets
Procédé et dispositif de formage de contre-dépouilles pendant l' assemblage de pièces superposées, notamment tôles métalliques revêtues et/ou peintes

(43) Veröffentlichungstag der Anmeldung: 16.10.2002
(73) Patentinhaber: INPRO Innovationsgesellschaft für fortgeschrittene Produktionssysteme in der Fahrzeugindustrie mbH, 10587 Berlin (DE)
(72) Erfinder: Gigengack, Thomas, 10785 Berlin (DE); Mende, Torsten, 49688 Lastrup (DE)
(74) Vertreter: Hoffmann, Klaus-Dieter, Dipl.-Ing.

(56) Entgegenhaltungen:
- DE-A- 4 404 659
- DE-A- 19 913 695
- DE-A- 19 913 757
- DE-A- 19 918 516

## Beschreibung

Die Erfindung betrifft ein Verfahren zum Ausformen des Hinterschnitts beim Durchsetzfügen mindestens zweier, von einem Niederhalter flächig aufeinanderliegend gehaltener Bauteile, gemäß dem Oberbegriff der Ansprüche 1, 4, 5 und 6.

Die Erfindung betrifft ferner eine Vorrichtung zur Durchführung dieses Verfahrens, mit einem von einem Niederhalter umgebenden Stempel zum Durchsetzen flächig aufeinanderliegender Bauteile, insbesondere beschichteter und/oder endlackierter Blechplatinen, und mit einer gegenüberliegend angeordneten, einen Formraum umfassenden und einen Amboß aufweisenden Matrize mit auch quer zur Längsachse des Stempels beweglichen seitlichen Matrizenlamellen, gemäß dem Oberbegriff der Ansprüche 7 und 8.

Für den kostenintensiven Bereich der Lackiererei in der Automobilproduktion ist es von Wichtigkeit, verbesserte mechanische Fügeverfahren für insbesondere endlackierte Bleche zu Verfügung zu stellen. Bei endlackierten Blechen handelt es sich um Stahlfeinbleche, die im Coil-Coating Verfahren mit KTL, Füller und farbgebender Decklackschicht vorbeschichtet werden, wobei die Qualität hinsichtlich Oberfläche, Schichtdicke usw. sehr hoch ist.

Beim Durchsetzfügen, unter dem allgemein ein Verfahren zum Verbinden von überlappt angeordneten Blech-, Rohr- und Profilteilen durch Kaltverformung mittels Stempel und Matrize verstanden wird, findet ein gemeinsames partielles Verschieben des Blechwerkstoffes der Fügepartner aus der Blechebene und ein nachfolgendes Stauchen statt, so daß durch Breiten und/oder Fließpressen eine nicht lösbare Verbindung entsteht, die form- und kraftschlüssig ist.

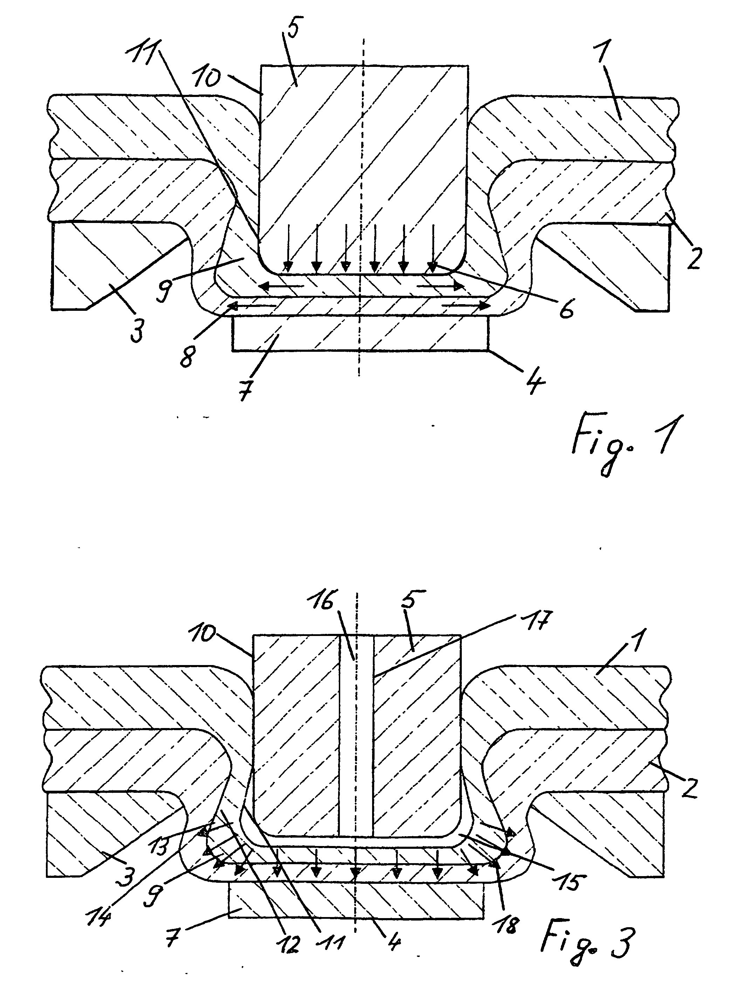

Wie Fig. 1 der Zeichnungen schematisch verdeutlicht, werden beim konventionellen Durchsetzfügen von flächig aufeinanderliegenden Blechplatinen in einem ersten Verfahrensschritt die zu fügenden Blechplatinen 1, 2 durch einen nicht dargestellten Niederhalter gegen die Lamellen 3 einer Matrize 4 zusammengedrückt. Im zweiten Verfahrensschritt erfolgt dann das Durchsetzen, bei dem der Stempel 5 die zu fügenden Blechplatinen 1, 2 herunterdrückt. Im dritten Verfahrensschritt wird zur Erzeugung des Formschlusses der Fügedruck (Pfeile 6) erhöht. Da der Blechwerkstoff matrizenseitig auf dem Amboß 7 aufliegt, kann er nur durch einen in Querrichtung stattfindenden Fließpreßvorgang (Pfeile 8) zur Seite ausweichen, wodurch der Formschluß oder Hinterschnitt 9 der Blechplatinen 1, 2 erzeugt wird. Die Größe des Hinterschnitts 9 bestimmt maßgeblich die Verbindungssteifigkeit.

Fig. 1 und Fig. 2 der Zeichnungen - in letzterer ist ein durch ein Experiment verifizierte Hinterschnitt 9 beim konventionellen Durchsetzfügen gezeigt - machen ferner deutlich, daß die zur Mantelfläche 10 des Stempels 5 benachbarte Oberfläche 11 der durchgesetzten Blechplatinen 1, 2 im Bereich des Hinterschnitts 9 nur unwesentlich von der senkrechten Ausrichtung abweicht und im Hinterschnitt 9 nicht zu den anderen Oberflächen 12, 13, 14 der Blechplatinen 1, 2 parallel verformt verläuft, d.h. der Hinterschnitt 9 weist -. gesehen vom Formraum 15 der Matrize 4 aus - nur eine verhältnismäßig schwach ausgeformten Gestalt auf.

Beim Einsatz mechanischer Fügeverfahren insbesondere an beschichteten und/oder endlackierten Blechen werden hohe Verbindungsfestigkeit, Korrosionsbeständigkeit der Fügestelle und Lackerhaltung an der Fügestellung gefordert. Lackbeschädigungen an einem Durchsetzfügepunkt aus beschichteten und/oder endlackiertem Blech haben nicht nur ein optisch äußerst negatives Erscheinungsbild zur Folge, sondern es ist auch die Gefahr gegeben, daß an den bis auf das Substrat durchgehenden Rissen in der Beschichtung oder im Lack Korrosion auftritt. Beim Einsatz des zuvor erwähnten konventionellen Durchsetzfügens an endlackierten Blechen wird der Formschluß indirekt durch eine Art "Querfließpressen" im Boden des Fügelementes erzeugt, was einen sehr hohen Kraftaufwand bedingt. Zugleich wird der Lack durch Reibung, die durch Relativbewegung zwischen Stempel und Blechplatine bzw. zwischen Blechplatine und Amboß hervorgerufen wird, stark belastet. Derartige Nachteile werden bei einem wirkmedienunterstützten Durchsetzfügen von Blechplatinen gemindert.

In diesem Zusammenhang ist auf die DE 44 04 659A zu verweisen, aus der ein Verfahren zum Herstellen einer Nietverbindung hervorgeht, bei dem flächig aufeinanderliegende Bleche durch Verdrängen von Blechmaterial mit einem Stempel in den Formhohlraum einer Matrize zum Ausformen einer Eintiefung und durch Fließpressen des verdrängten Materials miteinander verbunden werden, wobei das Blechmaterial nach Art eines Tiefziehvorgangs ohne Aufschneiden der Bleche in den Formhohlraum verdrängt wird, ein Preßkörper in der Eintiefung durch den Stempel radial aufgeweitet wird und die Bleche im Verformungsbereich durch den Preßkörper fließverformt werden, der scheibenförmig ausgebildet sein kann. Ferner kann der Stempel in einem Stempelkanal des Niederhalters verschiebbar und in dem Niederhalter ein seitlicher Kanal zum Zuführen des Preßkörpers vorgesehen sein.

Bekannt ist weiterhin ein Verfahren zur Herstellung einer Nietverbindung von flächig aufeinanderliegenden Blechen (DE 199 13 757 A1), bei dem die aufeinanderliegenden Bleche durch ein von einem Werkzeug beaufschlagtes Niet beaufschlagt und das Blechmaterial in den Formraum einer Matrize gedrängt wird. Hierbei übt die Matrize im Laufe des Niet-Setzvorganges eine das Werksstückmaterial an eine Niet- Mantelfläche andrückende Querkraft aus, die über ein in die Matrize einleitbares, unter hohen Druck Pᵢ setzbares Fluidum erzeugt wird.

Schließlich ist ein Verfahren zum Verbinden mindestens zweier flächiger, übereinander liegender Bauteile, insbesondere Blechplatinen, bekannt (DE 199 18 516 A1), bei dem an der Verbindungsstelle ein mit einer Ausnehmung versehenes matrizenartiges Werkzeugunterteil an eine Oberfläche einer ersten Blechplatine gebracht wird und Abschnitte beider Blechplatinen unter der Wirkung eines aus einem Kanal eines stempelartigen Werkzeugoberteils unter hohem Druck austretenden Fluidums in die Ausnehmung hineingeformt werden. Hierbei wird in einen auf einer gegenüberliegende Oberfläche einer zweiten Blechplatine entstehenden Hohlraum ein Stopfen eingefügt, der aus dem später aushärtbaren Fluidum gebildet wird.

Der Erfindung liegt die Aufgabe zugrunde, ein Verfahren und eine Vorrichtung zum Ausformen eines Hinterschnitts beim Durchsetzfügen zweier flächig aufeinander gehaltener Bauteile, insbesondere beschichteter und/oder endlackierter Blechplatinen, zur Verfügung zu stellen, mit dem bzw. der durch Einwirkung des Stempels eine verstärkte Ausprägung des Hinterschnitts und damit eine Erhöhung der Verbindungsfestigkeit bei Vermeidung von Beschädigungen der Oberflächensysteme, wie z.B von Beschichtungen und Lacksystemen erreicht wird, wobei insbesondere angestrebt wird, daß die zueinander benacchbarten Oberflächen der Blechplatinen im ausgeformten Hinterschnitt zueiander parallel verlaufen.

Diese Aufgabe wird durch ein Verfahren mit den Merkmalen der Ansprüche 1, 4, 5 und 6 gelöst.

Vorzugsweise wird die abdichtende Flächenpressung zwischen der Mantelfläche des Stempels und der an dieser anliegenden Blechplatinenoberfläche durch einen im Stempelmantel eingelassenen Schraubendichtring aus Kunststoff erhöht, der innenseitig von dem in den Stempelkanal unter hohem Druck eingeleiteten Wirkmedium gegen die an der Mantelfläche des Stempels anliegende Blechplatinenoberfläche beaufschlagt wird.

Als Wirkmedium, das unter hohem Druck durch den den Stempel senkrecht durchsetzenden Kanal diesen elastisch aufweitend in den Formraum der Matrize eingeleitet wird, kann bevorzugt Wasser, Petroleum, Gel oder Öl hoher Viskosität und mit geringem Anteil an Verdünnungsstoffen verwendet werden.

Außerdem kann als das Durchsetzfügen unterstützende Wirkmedium zwischen der Beaufschlagungsfläche des Stempels und der letzterer zugewandten Blechplatinenenoberfläche auch ein Elastomer, ein Plastomer, ein Thermoplast, ein Klebstoff, ein Wachselement, eine faserverstärkte Teflonscheibe, eine Gelkapsel oder ein Leichtmetallelement, wie z.B. ein Aluminiumelement vorgesehen werden. Das zwischen der Beaufschlagungsfläche des Stempels und der letzterer zugewandten Blechplatinenoberfläche in Stellung gebrachte Wirkmedium kann bevorzugt während des Fügeschritts von dem sich abwärts bewegenden Stempel aus einem Gurt oder einer Platte herausgetrennt werden.

Zur Verbesserung der Abdichtung zwischen der Mantelfläche des Stempels und der Oberfläche der durchgesetzten oberen Blechplatine kann der Stempel mit einem Schraubendichtring aus Kunststoff versehen werden, durch den beim elastischen Aufweiten des Stempels infolge des Drucks des in den Stempelkanal eingeleiteten Wirkmediums die Flächenpressung F_{P} so vergrößert wird, daß sie höher als der Innendruck Pᵢ im Formraum ist. Das unter hohem Druck in den Stempelkanal eingeleitete Wirkmedium unterstützt somit den Schraubendichtring.

Eine Vorrichtung zur Durchführung des erfindungsgemäßen Verfahrens nach Patentanspruch 4 bzw. 6 ist in den Ansprüchen 7 bzw. 8 definiert.

Das erfindungsgemäße Verfahren sorgt für eine Erhöhung der Verbindungsfestigkeit des Fügepunktes durch eine wesentlich verstärkt ausprägte Ausformung des Hinterschnitts mit ausgeglichener Spannungsverteilung im Fügepunkt, wobei durch die Reduzierung der Flächenpressung Beschädigungen der Oberflächensysteme wie z.B. von Beschichtungen oder Lacksystemen weitgehend vermieden werden. Die mit Hilfe des Stempels durchgesetzten Blechplatinen werden bei dem erfindungsgemäßen Verfahren im Bodenbereich nur sehr gering bzw. nicht mit dem Stempel gestaucht. Der durch das Wirkmedium im vorgeformten oder durchgesetzten Fügepunkt verursachte allseitig wirkende Druck ermöglicht eine wesentlich ausgeprägtere Ausformung des Hinterschnitts als beim konventionellen Durchsetzfügen, da das Material dem Zwang ausgesetzt wird, in freie Bereiche auszuweichen und damit den ausgepägten Hinterschnitt in einer mit dem Aufblasen eines Behältnisses vergleichbaren Weise zu erzeugen. Wie Versuchsergebnisse belegen, werden die beim konventionelle Durchsetzfügen von Blechplatinen üblichen Flächenpressungen im Formraum zwischen dem Amboß der Matrize und der unteren Blechplatine bzw. der Beaufschlagungsfläche des Stempels und der oberen Blechplatine durch das erfindungsgemäße Verfahren beträchtlich reduziert. Das herkömmliche Fließpressen wird beim erfindungsgemäßen Verfahren quasi durch ein Aufweiten/Aufblasen des Fügepunktes substituiert. Im Versuch mit der FEM-Simulation zeigt sich eine gleichmäßigere Spannungsverteilung in den Umformzonen als beim konventionellen Durchsetzfügen, da mit dem erfindungsgemäßen Verfaren Spannungsspitzen abgebaut werden. Die wesentlich verstärkte Ausprägung des Hinterschnitts hat eine nicht unbeträchtliche Festigkeitssteigerung der Verbindung zur Folge. Auch die Verwendung eines aushärtbaren, das Durchsetzfügen unterstützenden Wirkmediums, das nach dem Umformschritt in der Fügemulde belassen wird, erweist sich insbesondere beim Kopfzugversuch als festigkeitssteigernd für die hergestellte Verbindung, da ein Ausknicken der inneren Blechlage in den erzeugten Freiraum durch eine Stopfenbildung des Wirkmediums verhindert wird.

Mögliche Durchführungsformen des erfindungsgemäßen Verfahrens und Ausführungsformen der Vorrichtung zur Durchführung des Verfahrens werden nun anhand der Figuren 3 bis 9 bzw. 10 bis 12 der Zeichnungen im einzelnen erläutert, die schematisierte Schnittdarstellungen der bei den unterschiedlichen Vorgehensweisen des Verfahrens jeweils hergestellten Fügeverbindung zwischen zwei Blechplatinen mit zugeordnetem Werkzeug aus Stempel und Matrize bzw. von Ausführungsformen der Vorrichtung zur Durchführung des Verfahrens zeigen.

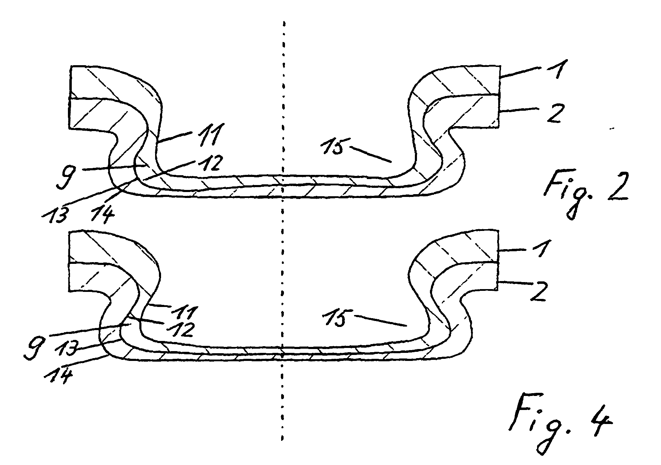

Fig. 3 zeigt den Stempel 5 in einer nach unten in den Formraum 15 der Materize 4 bewegten Stellung, wobei die beiden flächig aufeinanderliegenden Blechplatinen 1 und 2 bereits durchgesetzt sind und zugleich ein das Durchsetzfügen unterstützendes Wirkmedium 16 unter hohem Druck durch einen den Stempel 5 längsmittig durchsetzenden Kanal 17 hindurch in den Formraum 15 der Matrize 4 eingeleitet wird. Durch das unter hohem Druck eingeleitetet Wirkmedium 16, das ein beliebiges Fluidum, jedoch bevorzugt Wasser, Petroleum, Gel oder Öl hoher Viskosität und mit geringem Anteil an Verdünnungsstoffen sein kann, wird , wie die Pfeile 18 verdeutlichen, ein in dem Formraum 15 der Matrize 4 allseitig wirkender Innendruck aufgebaut, durch den ein Ausweichen des Materials im durchgesetzten Fügepunkt der Blechplatinen 1, 2 in freie Bereiche bewirkt wird. Die Matrizenlamellen 3 bewegen sich zur Seite, und es erfolgt eine wesentlich verstärkt ausgeprägte Ausformung des Hinterschnitts 9 der gefügten Blechplatinen 1, 2 bei reduzierter Flächenpressung und ohne Reibungsverluste zwischen dem Stempel 5 und der oberen Blechplatine 1 derart, daß, wie insbesondere die Fig. 4 in Gegenüberstellung zur Fig. 2 verdeutlicht, die zueinander benachbarten Oberflächen 11, 12, 13, 14 der Blechplatinen 1, 2 im ausgeformten Hinterschnitt 9 zueinander parallel verlaufen.

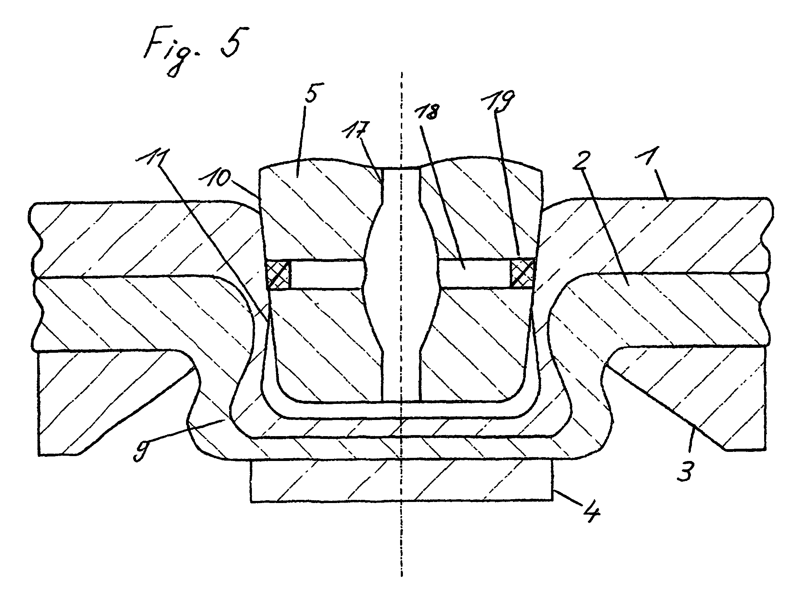

Wie zugleich aus Fig. 5 hervorgeht, dehnt sich der Stempel 5 elastisch durch den Innendruck und dichtet mit seiner Mantelfläche 10 gegen die benachbarte Oberfläche 11 der durchgesetzten oberen Blechplatine 1 ab. Zur Verbesserung der Abdichtung zwischen der Mantelfläche 10 des Stempels 5 und der Oberfläche 11 der durchgesetzten oberen Blechplatine 1 kann der Stempel 5 einen Schraubendichtring 19 aus Kunststoff mit Re = 400 N/mm2 aufweisen, durch den beim elastischen Aufweiten des Stempels 5 infolge des vom Wirkmedium 16 erzeugten Innendrucks die Flächenpressung F_{P} so vergrößert wird, daß sie höher als der Innendruck Pᵢ ist. Das Wirkmedium 16 wirkt sozusagen hinter dem Schraubendichtring 19, um diesen von hinten zu unterstützen.

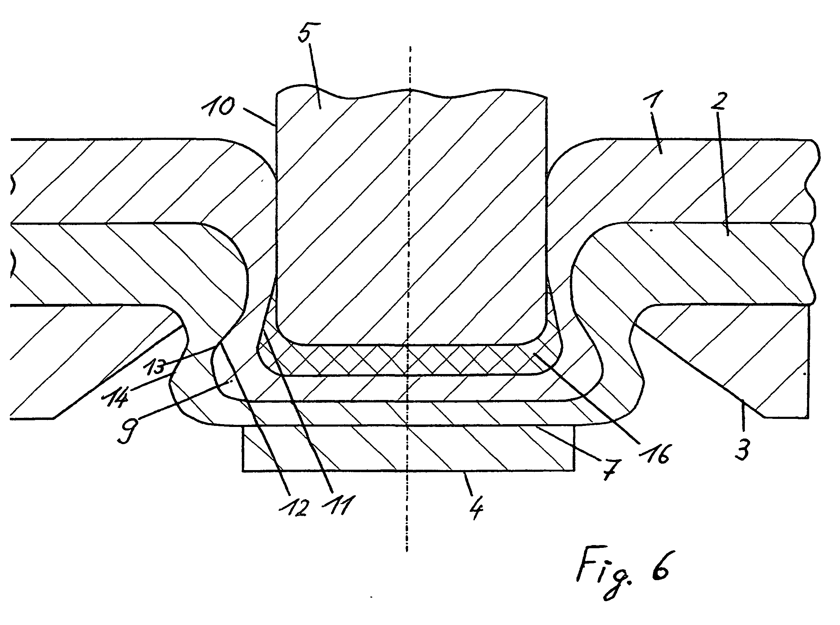

Wie Fig. 6 zeigt, kann das Verfahren zum Ausformen des Hinterschnitts beim Durchsetzfügen auch unter Verwendung eines zwischen der Beaufschlagungsfläche 20 des Stempels 5 und der benachbarten Oberfläche 11 der oberen durchgesetzten Blechplatine 1 vorgesehenen Wirkmediums 16 in Plättchenform eines Elastomers, eines Plastomers, eines Thermoplastes, eines Klebstoffes, eines Wachselementes oder in Form einer faserverstärkten Teflonscheibe oder eines Leichtmetallelementes z.B. aus Aluminum durchgeführt werden. Der beim Durchsetzen des Stempels 5 vom Wirkmedium 16 erzeugte Innendruck Pᵢ garantiert ein ausgeprägtes Ausformen des Hinterschnitts 9 beim seitlichen Ausweichen der Matrizenlamellen 3 unter Vermeidung einer hohen Flächenpressung zwischen dem Stempel 5 und der oberen Blechplatine 1.

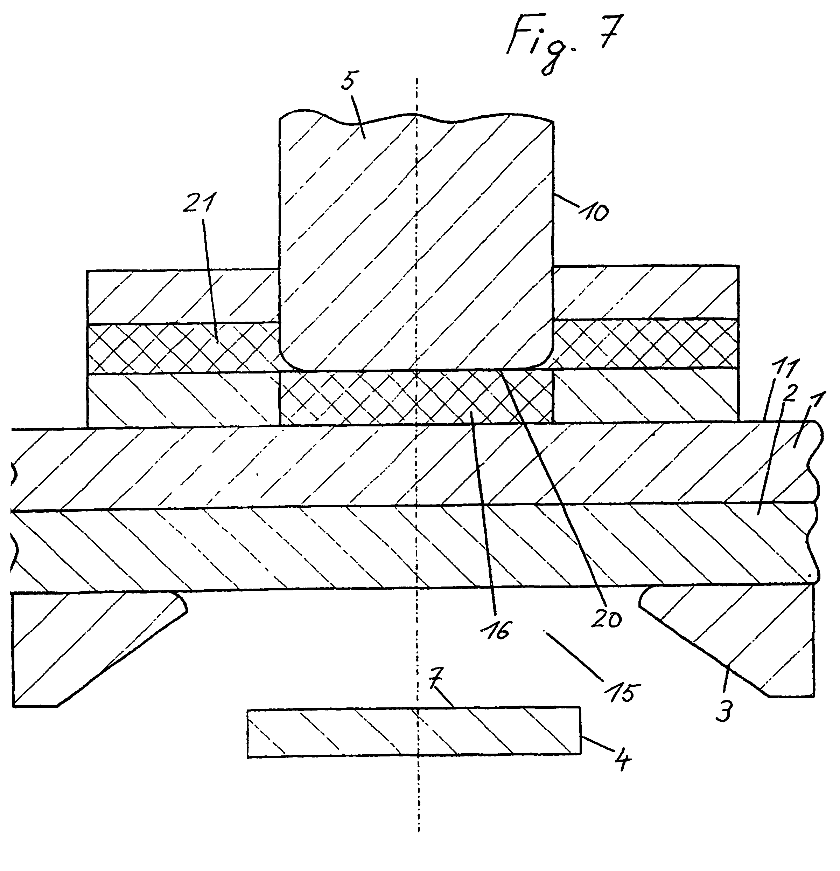

Aus Fig. 7 geht hervor, daß das Wirkmedium 16 zwischen der Beaufschlagungsfläche 20 des Stempels 5 und der letzterer zugewandten Blechplatinenoberfläche 11 bevorzugt während des Fügeschrittes von dem sich abwärts bewegenden Stempel 5 aus einem Gurt oder einer Platte 21 herausgetrennt werden kann.

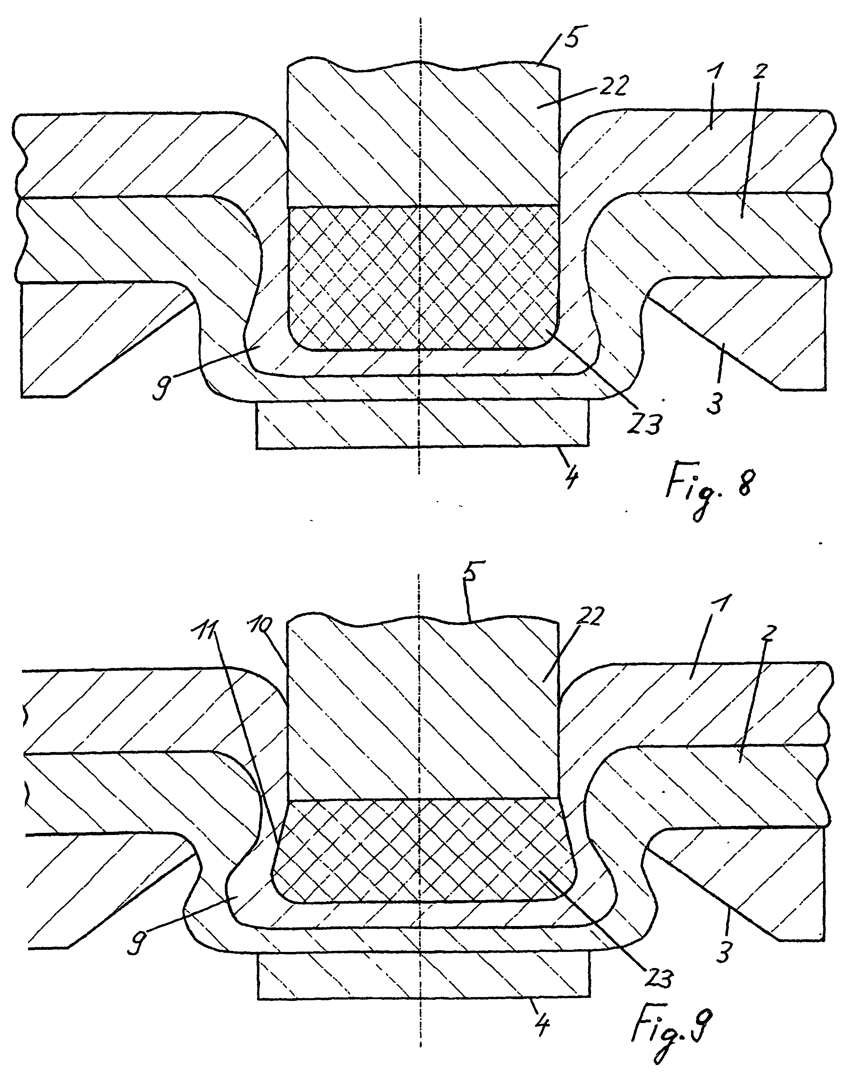

Wie den Fig. 8 und 9 zu entnehmen ist, kann das Wirkmedium auch von einem mit dem Grundkörper 22 des Stempels 5 einstückig ausgebildeten Stempelkopf 23 aus einem sehr gut verformbaren Material wie z.B. Kunststoff gebildet werden. Fig. 8 zeigt den noch unverformten Stempelkopf 23 nach dem Durchsetzen. Bei der Erhöhung des Stempeldrucks wird, wie aus Fig.9 hervorgeht, das Material des Stempelkopfes 23 durch die fortschreitende Verfestigung des Blechplatinenmaterials aufgeweitet und der Hinterschnitt 9 dabei ausgeprägt geformt. Das Material des Stempelkopfes 23 erholt sich nach vollendeter Ausprägung des Hinterschnitts 9 von der Verformung und geht einem weiteren Formvorgang nicht verloren.

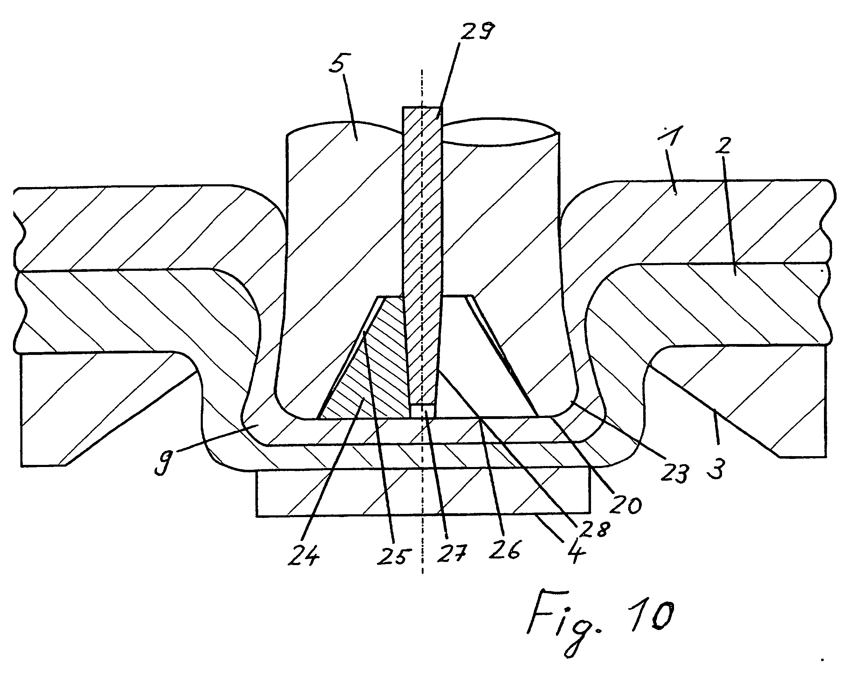

Fig. 10 zeigt eine Vorrichtung zur Durchführung des Verfahrens, bei der ein Spreitz-Kegels 24 als Wirkmedium zum Ausformen des Hinterschnitts 9 beim Durchsetzfügen zur Anwendung kommt. Von der Beaufschlagungsfläche 20 des Stempels 5 erstreckt sich etwa bis zu dessen Mitte eine kegelstumpfförmige Ausnehmung 25, in der der Spreitz-Kegel 24 so aufgenommen ist, daß seine untere Fläche 26 bündig zur Stirnfläche 20 des Stempels 5 verläuft. Der Spreitz-Kegel 24 weist längsmittig einen nach unten zu konisch verlaufenden Führungskanal 27 auf, in den von oben das nach unten zu konisch verlaufende Ende 28 eines sich durch den Stempel 5 längsmittig erstreckenden Dorns 29 eingeführt wird. Hierbei spreitzt der Dorn 29 den Spreitz-Kegel 24 und damit den Stempel 5 an seinem unteren Ende 23 derart elastisch nach außen, daß eine verstärkt ausgeprägte Ausformung des Hinterschnitts 9 der gefügten Verbindung der Blechplatinen 1 und 2 erfolgt.

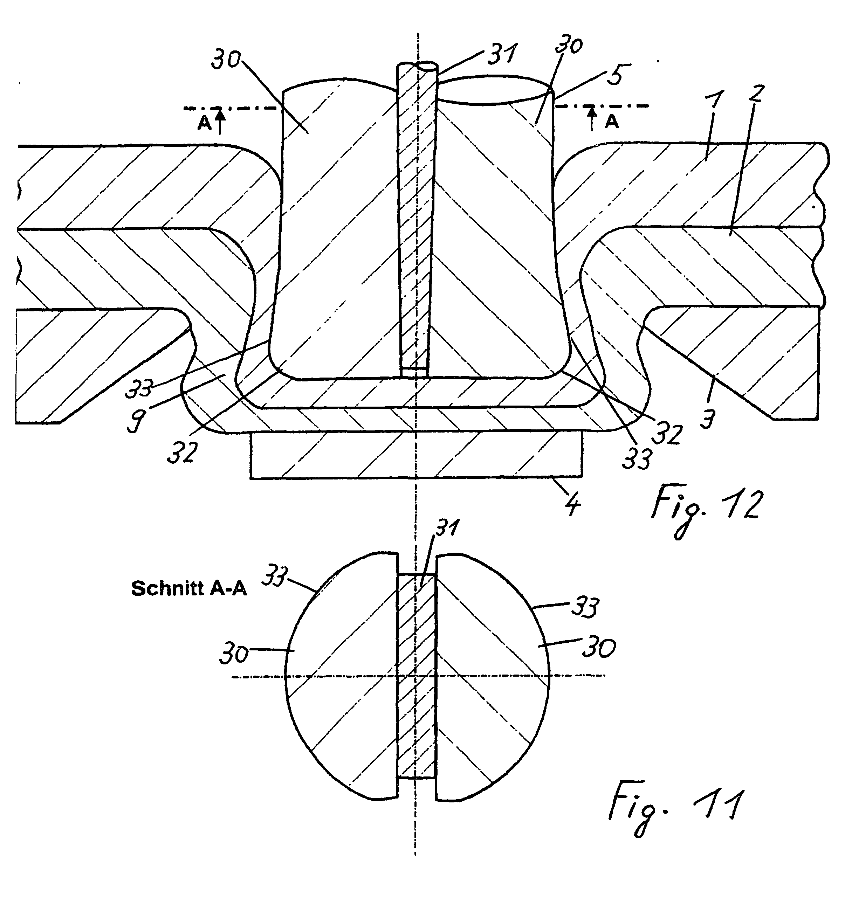

Bei einer anderen Ausführungsform der Vorrichtung zur Durchführung des Verfahrens ist der Stempel 5, wie die Draufsicht nach Fig. 11 zeigt, die einen Schnitt in der Ebene A - A der schematischen Schnittdarstellung nach Fig. 12 darstellt, aus zwei Halbschalen 30 gebildet, die nach dem Durchsetzen der Blechplatinen 1, 2 durch einen sich nach unten verjüngenden, von oben senkrecht zwischen die beiden Halbschalen 30 einfahrbaren Keil 31 horizontal auseinanderdrückbar sind. Die Halbschalen 30 des Stempels 5 sind jeweils am unteren Ende 32 ihres Außenmantels 33 aufgeweitet. Werden die beiden Halbschalen 30 beim Einfahren des Keils 31 zwischen die Halbschalen 30 senkrecht zur Einfahrrichtung des Keils 31 auseinandergedrückt, so wird von den aufgeweiteten Enden 32 der Halbschalen 30 des Stempels 5 der verstärkt ausgeprägte Hinterschnitt 9 im Fügepunkt geformt.

## Patentansprüche

1. Verfahren zum Ausformen des Hinterschnitts beim Durchsetzfügen mindestens zweier, von einem Niederhalter flächig aufeinanderliegend gehaltener Bauteile, insbesondere beschichteter und/oder endlackierter Blechplatinen, bei dem durch Wirkung eines beweglichen Stempels die Bauteilabschnitte im Fügebereich in den Formraum einer einen Amboß aufweisenden Matrize hineingedrängt und der Hinterschnitt der durchgesetzten Blechplatinen anschließend ausgeformt wird, indem ein das Durchsetzfügen der Blechplatinen unterstützendes Wirkmedium vorgesehen wird, durch das im Formraum der Matrize unter Bildung einer Wirlanediumschicht zwischen der Beaufschlagungsfläche des Stempels und der dieser zugewandten Blechplatinenoberfläche ein allseitig wirkender Innendruck Pᵢ aufgebaut wird, durch den ein Ausweichen des Materials im durchgesetzten Fügepunkt der Blechplatinen in freie Bereiche bewirkt wird, **dadurch gekennzeichnet, daß** das Wirkmedium durch einen den Stempel senkrecht durchsetzenden Kanal hindurch in den Formraum der Matrize unter hohem Druck eingeleitet und der Stempel dabei derartelastisch aufgeweitet wird, daß die abdichtende Flächenpressung F_{P} zwischen der Mantelfläche des Stempels und der an dieser anliegenden Blechplatinenoberfläche höher als der aufgebaute Innendruck Pᵢ ist.

2. Verfahren nach Anspruch 1, **dadurch gekennzeichnet, daß** die abdichtende Flächenpressung F_{P} zwischen der Mantelfläche des Stempels und der an dieser anliegenden Blechplatinenoberfläche durch einen im Stenipehnantel eingelassenen Schraubendichtring aus Kunststoff erhöht wird, der innenseitig von dem in den Stempelkanal unter hohem Druck eingeleiteten Wirkmedium gegen die an der Mantelfläche des Stempels anliegende Blechplatinenoberfläche beaufschlagt wird.

3. Verfahren nach Anspruch 1 und 2, **dadurch gekennzeichnet, daß** als Wirkmedium Wasser, Petroleum, Gel oder Öl hoher Viskosität und mit geringem Anteil an Verdünnungsstoffen verwendet wird.

4. Verfahren zum Ausformen des Hinterschnitts beim Durchsetzfügen mindestens zweier, von einem Niederhalter flächig aufeinanderliegend gehaltener Bauteile, insbesondere beschichteter und/oder endlackierter Blechplatinen, bei dem durch die Wirkung eines beweglichen Stempels die Bauteilabschnitte im Fügebereich in den Formraum einer einen Amboß aufweisenden Matrize hineingedrängt und der Hinterschnitt der durchgesetzten Blechplatinen anschließend ausgeformt wird, indem ein das Durchsetzfbgen der Blechplatinen unterstützendes Wirkmedium vorgesehen wird, durch das im Formraum der Matrize ein allseitig wirkender Innendruck Pᵢ aufgebaut wird, durch den ein Ausweichen des Materials im durchgesetzten Fügepunkt der Blechplatinen in freie Bereiche bewirkt wird, **dadurch gekennzeichnet, daß** als Wirkmedium im Innern des Stempels ein Spreitz-Kegel mit einem konischen Führungskanal vorgesehen wird, in den ein Dorn unter Spreitzen des Spreitz-Kegels eingeführt wird, wobei der Stempel elastisch aufgeweitet und der verstärkt ausgeprägte Hinterschnitt der gefügten Blechplatinen vom aufgeweiteten Stempel ausgeformt wird.

5. Verfahren zum Ausformen des Hinterschnitts beim Durchsetzfügen mindestens zweier, von einem Niederhalter flächig aufeinanderliegend gehaltener Bauteile, insbesondere beschichteter und/oder endlackierter Blechplatinen, bei dem durch Wirkung eines beweglichen Stempels die Bauteilabschnitte im Fügebereich in den Formraum einer einen Amboß aufweisenden Matrize hineingedrängt und der Hinterschnitt der durchgesetzten Blechplatinen anschließend ausgeformt wird, indem ein das Durchsetzfügen der Blechplatinen unterstützendes Wirkmedium vorgesehen wird, durch das im Formraum der Matrize ein allseitig wirkenden Innendruck Pᵢ aufgebaut wird, durch den ein Ausweichen des Materials im durchgesetzten Fügepunkt der Blechplatinen in freie Bereiche bewirkt wird, **dadurch gekennzeichnet, daß** als Wirkmedium ein mit dem Grundkörper des Stempels einteilig ausgebildeter Stempelkopf aus einem verformbaren Kunststoff verwendet wird, der sich nach dem Durchsetzen und der Erhöhung des Drucks durch die fortschreitende Verfestigung des Blechplathitmmaterials im Fügepunkt aufweitet, wobei der Stempelkopf den Hinterschnitt verstärkt ausformt und anschließend seine Ausgangskontur wieder einnimmt.

6. Verfahren zum Ausformen des Hinterschnitts beim Durchsetzfügen mindestens zweier, von einem Niederhalter flächig aufeinanderliegend gehaltener Bauteile, insbesondere beschichteter und/oder endlackierter Blechplatinen, bei dem durch Wirkung eines beweglichen Stempels die Bauteilabschnitte im Fügebereich in den Formraum einer einen Amboß aufweisenden Matrize hineingedrängt und der Hinterschnitt der durchgesetzten Blechplatinen anschließend ausgeformt wird, indem ein das Durchsetzfügen der Blechplatinen unterstützendes Wirkmedium vorgesehen wird, durch das im Formraum der Matrize ein allseitig wirkender Innendruck Pᵢ aufgebaut wird, durch den ein Ausweichen des Materials im durchgesetzten Fügepunkt der Blechplatinen in freie Bereiche bewirkt wird, **dadurch gekennzeichnet, daß** als Wirkmedium zwei Halbschalen eines Stempels verwendet werden, die am unteren Ende ihres Außenmantels jeweils aufgeweitet sind und durch einen von oben senkrecht zwischen die Halbschalen eingefahrenen, sich nach unten verjüngenden Keil senkrecht zu dessen Einfahrrichtung auseinandergedrückt werden, wobei der verstärkt ausgeprägte Hinterschnitt im Fügepunkt von den Halbschalen des Stempels ausgeformt wird.

7. Vorrichtung zur Durchführung des Verfahrens nach Anspruch 4 mit einem von einem Niederhalter umgebenen Stempel zum Durchsetzfügen flächig aufeinanderliegender Bauteile, insbesondere beschichteter und/oder endlackierter Blechplatinen, und mit einer gegenüberliegend angeordneten, einen Formraum umfassenden und einen Amboß aufweisenden Matrize mit quer zur Längsachse des Stempels beweglichen seitlichen Matrizenteilen, **dadurch gekennzeichnet, daß** in einer sich von der Beaufschlagungsfläche (20) des Stempels (5) bis zur Stempelmitte erstreckenden Ausnehmung (25) des Stempels (5) ein Spreitz-Kegel (24) aufgenommen ist, dessen untere Fläche (26) zur Beaufschlagungsfläche (20) des Stempels (5) plan verläuft und der mittig einen in Richtung der Längsachse des Stempels (5) nach unten konisch verlaufenden Führungskanal (27) aufweist, in den ein sich durch den Stempel (5) längsmittig erstreckender Dorn (29) mit nach unten konisch verlaufendem Ende (23) unter Spreitzen des Spreitz-Kegels (24) und elastischem Aufweiten des Stempels (5) zur verstärkt ausgepägten Ausformung des Hinterschnitts (9) der durchsetzgefügten Blechplatinen (1, 2) einführbar ist.

8. Vorrichtung zur Durchführung des Verfahrens nach Anspruch 6 mit einem von einem Niederhalter umgebenen Stempel zum Durchsetzfügen flächig aufeinanderliegender Bauteile, insbesondere beschichteter und/oder endlackierter Blechplatinen, und mit einer gegenüberliegend angeordneten, einen Formraum umfassenden und einen Amboß aufweisenden Matrize mit quer zur Längsachse des Stempels beweglichen seitlichen Matrizenteilen, **dadurch gekennzeichnet, daß** der Stempel (5) aus zwei Halbschalen (30) gebildet ist, die am unteren Ende (32) ihres Außenmantels (33) jeweils aufgeweitet und von einem sich nach unten verjüngenden Keil (31) senkrecht zur Stempellängsachse auseinanderdrückbar sind, der stempelmittig senkrecht von oben zwischen die Halbschalen einfahrbar ist, und daß der verstärkt ausgeprägte Hinterschnitt (9) beim Auseinanderdrücken der Halbschalen (30) von den aufgeweiteten unteren Enden (32) des Außenmantels (33) der Halbschalen (30) im Fügepunkt formbar ist.

## Claims

1. A method for the forming of the undercut when clench-jointing at least two building components, in particular coated and/or vanished sheet-metal plates, held by a hold-down device lying one upon the other over their surface area, whereby the sections of the building components in the jointing area are pushed by the action of a mobile upper die into the moulding space of a bottom die having an anvil and the undercut of the clench-jointed sheet-metal plates is subsequently formed, whereby an active medium supporting the clench-jointing of the sheet-metal plates is provided, by means of which an internal pressure Pᵢ acting on all sides is built up in the moulding space of the bottom die thereby forming an active-medium layer between the impingement area of the upper die and the surface of the sheet-metal plate facing the latter, as a result of which internal pressure the material at the clenched jointing point of the sheet-metal plates is caused to yield into free zones, **characterised in that** the active medium is introduced under high-pressure into the moulding space of the bottom die through a channel vertically penetrating the upper die and the upper die is widened elastically in such a way that sealing surface pressure Fₚ between the lateral surface of the upper die and the surface of the sheet-metal plate adjacent to the latter is higher than built-up internal pressure Pᵢ.

2. The method according to claim 1, **characterised in that** sealing surface pressure Fₚ between the lateral surface of the upper die and the surface of the sheet-metal plate adjacent to the latter is increased by a helical packing ring of plastics material embedded in the lateral surface of the upper die, said helical packing ring being impinged on the inside by the active medium, introduced under high pressure into the upper-die channel, against the surface of the sheet-metal plate lying adjacent to the lateral surface of the upper die.

3. The method according to claim 1 and 2, **characterised in that** water, petroleum, gel or oil of high viscosity and with a small portion of diluents is used as the active medium.

4. The method for the forming of the undercut when clench-jointing at least two building components, in particular coated and/or varnished sheet-metal plates, held by a hold-down device lying one upon the other over their surface area, whereby the sections of the building components in the jointing area are pushed by the action of a mobile upper die into the moulding space of a bottom die having an anvil and the undercut of the clench-jointed sheet-metal plates is subsequently formed, whereby an active medium supporting the clench-jointing of the sheet-metal plates is provided, by means of which an internal pressure Pᵢ acting on all sides is built up in the moulding space of the bottom die, as a result of which internal pressure the material at the clenched jointing point of the sheet-metal plates is caused to yield into free zones, **characterised in that** there is provided as an active medium inside the upper die an expansion cone with a conical guide channel, into which a mandrel is introduced thereby expanding the expansion cone, whereby the upper die is widened elastically and the more pronounced undercut of the jointed sheet-metal plates is formed by the widened upper die.

5. The method for the forming of the undercut when clench-jointing at least two building components, in particular coated and/or varnished sheet-metal plates, held by a hold-down device lying one upon the other over their surface area, whereby the sections of the building components in the jointing area are pushed by the action of a mobile upper die into the moulding space of a bottom die having an anvil and the undercut of the clench-jointed sheet-metal plates is subsequently formed, whereby an active medium supporting tne clench-jointing of the sheet-metal plates is provided, by means of which an internal pressure Pᵢ acting on all sides is built up in the moulding space of the bottom die, as a result of which internal pressure the material at the clenched jointing point of the sheet-metal plates is caused to yield into free zones, **characterised in that** an upper-die head made of deformable plastics material and designed in one piece with the basic body of the upper die is used as the active medium, which upper-die head, after the clenching and the increase in the pressure, expands at the jointing point due to the progressive compaction of the material of the sheet-metal plates, whereby the upper-die head increasingly forms the undercut and then reassumes its initial contour.

6. The method for the forming of the undercut when clench-jointing at least two building components, in particular coated and/or varnished sheet-metal plates, held by a hold-down device one upon the other over their surface area, whereby the sections of the building components in the jointing area are pushed by the action of a mobile upper die into the moulding space of a bottom die having an anvil and the undercut of the clench-jointed sheet-metal plates is subsequently formed, whereby an active medium supporting the clench-jointing of the sheet-metal plates is provided, by means of which an internal pressure Pᵢ acting on all sides is built up in the moulding space of the bottom die, as a result of which internal pressure the material at the clenched jointing point of the sheet-metal plates is caused to yield into free zones, **characterised in that** two half-shells of an upper die are used as the active medium, which half-shells are each widened at the lower end of their external lateral surface and are pushed apart by a wedge tapering downwards which is inserted vertically from above between the half shells, said pushing-apart being normal to the insertion direction of said wedge, whereby the more pronounced undercut is formed at the jointing point by the two half-shells of the upper die.

7. A device for the implementation of the method according to claim 4 with an upper die surrounded by a hold-down device for the clench-jointing of building components lying one upon the other over their surface area, in particular coated and/or varnished sheet-metal plates, and with a bottom die with lateral bottom-mould parts mobile at right angles to the longitudinal axis of the upper die, said bottom die being arranged lying opposite, containing a moulding space and having an anvil, **characterised in that** an expansion cone (24) is accommodated in a recess (25) of the upper die (5) extending from the impingement area (20) of the upper die (5) up to the middle of the upper die, the lower face (26) of which expansion cone runs horizontally towards the impingement area (20) of the upper die (5) and which expansion cone has in the centre a guide channel (27) running conically downwards in the direction of the longitudinal axis of the upper die (5), into which guide channel a mandrel (29) extending centrally lengthwise through the upper die (5) and having end (23) running conically downwards can be introduced, thereby expanding the expansion cone (24) and elastically widening the upper die (5) for the more pronounced formation of the undercut (9) of the clench-jointed sheet-metal plates (1, 2).

8. A device for the implementation of the method according to claim 6 with an upper die, surrounded by a hold-down device, for the clench-jointing of building components lying one upon the other over their surface area, in particular coated and/or varnished sheet-metal plates, and with a bottom die with lateral bottom-mould parts mobile at right angles to the longitudinal axis of the upper die, said bottom die being arranged lying opposite, containing a moulding space and having an anvil, **characterised in that** the upper die (5) is formed by two half-shells (30), which are each widened at the lower end (32) of their external lateral surface (33) and can be pushed apart at right angles to the longitudinal axis of the upper die by a wedge (31) tapering downwards, said wedge being able to the introduced vertically from above at the centre of the upper die between the two half shells, and that the more pronounced undercut (9) can be formed at the jointing point by the widened lower ends (32) of the external lateral surface (33) of the half-shells (30) when the half shells (30) are pushed apart.

## Revendications

1. Procédé en vue du démoulage de la contre-dépouille lors de l'assemblage d'au moins deux composants maintenus à plat l'un sur l'autre par un serre-flan, notamment de platines pour tôles enduites et/ou à vernis de finition, dans lequel les portions de composants sont poussées sous l'action d'une estampe mobile dans la région d'assemblage dans l'espace de moulage d'une matrice présentant une enclume et la contre-dépouille des platines pour tôles traversées est ensuite démoulée en ce qu'un agent actif assistant l'assemblage des platines pour tôles, par lequel une pression interne Pᵢ agissant de tout côté est générée dans l'espace de moulage de la matrice en formant une couche d'agent actif entre la surface de sollicitation de l'estampe et la surface des platines pour tôles tournée vers celle-ci, est prévu, pression par laquelle un écartement du matériau dans le point d'assemblage traversé des platines pour tôles est réalisé dans des régions libres, **caractérisé en ce que** l'agent actif est introduit par un canal traversant perpendiculairement l'estampe dans l'espace de moulage de la matrice sous haute pression et l'estampe est en l'occurrence élargie de manière élastique de sorte que la pression superficielle étanchéifiante Fₚ entre la surface d'enveloppe de l'estampe et la surface des platines pour tôles reposant sur celle-ci est supérieure à la pression interne générée Pᵢ.

2. Procédé selon la revendication 1, **caractérisé en ce que** la pression superficielle étanchéifiante Fₚ entre la surface d'enveloppe de l'estampe et la surface des platines pour tôles reposant sur celle-ci est augmentée par un anneau d'étanchéité à vis en plastique introduit dans l'enveloppe de l'estampe, lequel est sollicité du côté interne par l'agent actif introduit dans le canal de l'estampe sous haute pression contre la surface des platines pour tôles reposant sur la surface d'enveloppe de l'estampe.

3. Procédé selon les revendications 1 et 2, **caractérisé en ce que** de l'eau, du pétrole, du gel ou de l'huile de viscosité élevée et possédant une faible proportion de diluants est utilisé(e) comme agent actif.

4. Procédé en vue du démoulage de la contre-dépouille lors de l'assemblage d'au moins deux composants maintenus à plat l'un sur l'autre par un serre-flan, notamment de platines pour tôles enduites et/ou à vernis de finition, dans lequel les portions de composants sont poussées sous l'action d'une estampe mobile dans la région d'assemblage dans l'espace de moulage d'une matrice présentant une enclume et la contre-dépouille des platines pour tôles traversées est ensuite démoulée en ce qu'un agent actif assistant l'assemblage des platines pour tôles, par lequel une pression interne Pᵢ agissant de tout côté par laquelle un écartement du matériau dans le point d'assemblage traversé des platines pour tôles est réalisé dans des régions libres est générée dans l'espace de moulage de la matrice, est prévu, **caractérisé en ce qu'**un cône d'écartement avec un canal de guidage conique dans lequel un poinçon est introduit en écartant le cône d'écartement est prévu en tant qu'agent actif à l'intérieur de l'estampe, l'estampe étant élargie de manière élastique et la contre-dépouille marquée de manière renforcée des platines pour tôles assemblées étant démoulée de l'estampe élargie.

5. Procédé en vue du démoulage de la contre-dépouille lors de l'assemblage d'au moins deux composants maintenus à plat l'un sur l'autre par un serre-flan, notamment de platines pour tôles enduites et/ou à vernis de finition, dans lequel les portions de composants sont poussées sous l'action d'une estampe mobile dans la région d'assemblage dans l'espace de moulage d'une matrice présentant une enclume et la contre-dépouille des platines pour tôles traversées est ensuite démoulée en ce qu'un agent actif assistant l'assemblage des platines pour tôles, par lequel une pression interne Pᵢ agissant de tout côté par laquelle un écartement du matériau dans le point d'assemblage traversé des platines pour tôles est réalisé dans des régions libres est générée dans l'espace de moulage de la matrice, est prévu, **caractérisé en ce qu'**une tête d'estampe réalisée d'une pièce avec le corps de base de l'estampe en un plastique déformable est utilisée, laquelle s'élargit dans le point d'assemblage après la traversée et l'augmentation de la pression par la solidification progressive du matériau des platines pour tôles, la tête d'estampe déformant de manière renforcée la contre-dépouille et retournant ensuite à son contour de départ.

6. Procédé en vue du démoulage de la contre-dépouille lors de l'assemblage d'au moins deux composants maintenus à plat l'un sur l'autre par un serre-flan, notamment de platines pour tôles enduites et/ou à vernis de finition, dans lequel les portions de composants sont poussées sous l'action d'une estampe mobile dans la région d'assemblage dans l'espace de moulage d'une matrice présentant une enclume et la contre-dépouille des platines pour tôles traversées est ensuite démoulée en ce qu'un agent actif assistant l'assemblage des platines pour tôles, par lequel une pression interne Pᵢ agissant de tout côté par laquelle un écartement du matériau dans le point d'assemblage traversé des platines pour tôles est réalisé dans des régions libres est générée dans l'espace de moulage de la matrice, est prévu, **caractérisé en ce que** deux demi-coques d'une estampe sont utilisées en tant qu'agent actif, lesquelles sont à chaque fois élargies à l'extrémité inférieure de leur enveloppe externe et sont écartées par une clavette introduite par le haut perpendiculairement entre les demi-coques, se rétrécissant vers le bas perpendiculairement à sa direction d'introduction, la contre-dépouille marquée de manière renforcée étant démoulée dans le point d'assemblage des demi-coques de l'estampe.

7. Dispositif en vue de réaliser le procédé selon la revendication 4 comprenant une estampe entourée d'un serre-plan en vue d'assembler des composants se trouvant à plat l'un sur l'autre, notamment des platines pour tôles enduites et/ou à vernis de finition et comprenant une matrice disposée à l'opposé, comprenant un espace de moulage et présentant une enclume avec des parties de matrice latérales mobiles transversalement à l'axe longitudinal de l'estampe, **caractérisé en ce qu'**un cône d'écartement (24), dont la surface inférieure (26) s'étend en plan par rapport à la surface de sollicitation (20) de l'estampe (5) et qui présente au milieu un canal de guidage (27) s'étendant coniquement vers le bas dans la direction de l'axe longitudinal de l'estampe (5), canal dans lequel un dôme (29), s'étendant au milieu longitudinalement à travers l'estampe (5) avec une extrémité (23) s'étendant coniquement vers le bas, peut être introduit en écartant le cône d'écartement (24) et élargissant de manière élastique l'estampe (5) en vue du démoulage marqué de manière renforcée de la contre-dépouille (9) des platines pour tôles assemblées (1, 2), est logé dans un évidement (25) s'étendant depuis la surface de sollicitation (20) de l'estampe (5) jusqu'au milieu de l'estampe.

8. Dispositif en vue de réaliser le procédé selon la revendication 6 comprenant une estampe entourée d'un serre-plan en vue d'assembler des composants se trouvant à plat l'un sur l'autre, notamment des platines pour tôles enduites et/ou à vernis de finition et comprenant une matrice disposée à l'opposé, comprenant un espace de moulage et présentant une enclume avec des parties de matrice latérales mobiles transversalement à l'axe longitudinal de l'estampe, **caractérisé en ce que** l'estampe (5) est formée de deux demi-coques (30) qui sont élargies à chaque fois à l'extrémité inférieure (32) de leur enveloppe externe (33) et peuvent être écartées par une clavette (31) se rétrécissant vers le bas perpendiculairement à l'axe longitudinal de l'estampe, clavette qui peut être introduite au milieu de l'estampe perpendiculairement du haut entre les demi-coques et **en ce que** la contre-dépouille marquée de manière renforcée (9) peut être moulée dans le point d'assemblage lors de l'écartement des demi-coques (30) des extrémités inférieures élargies (32) de l'enveloppe externe (33) des demi-coques (30).
